# EUROPÄISCHE PATENTSCHRIFT

(11) **EP 1 298 331 B1**
(45) Veröffentlichungstag und Bekanntmachung des Hinweises auf die Patenterteilung: **07.06.2006**
(21) Anmeldenummer: 02405755.6
(22) Anmeldetag: 02.09.2002
(51) Int. Cl.: F16B 13/00, F16B 23/00, F16B 13/02, B25B 15/00, F16B 37/12, F16B 37/00, F16B 13/12

(54) **Schraubdübel**
Screw-plug
Vis-cheville

(30) Priorität: 01.10.2001 CH 18162001
(43) Veröffentlichungstag der Anmeldung: 02.04.2003
(73) Patentinhaber: MUNGO BEFESTIGUNGSTECHNIK AG, CH-4603 Olten (CH)
(72) Erfinder: Bappert, Adolf, 4616 Kappel (CH)
(74) Vertreter: Quehl, Horst Max

(56) Entgegenhaltungen:
- DE-A- 4 439 973
- DE-A- 10 038 016
- GB-A- 1 141 913
- GB-A- 2 357 130
- US-A- 5 558 479
- US-A- 5 690 454

## Beschreibung

Die Erfindung betrifft einen Schraubdübel entsprechend dem Oberbegriff des Anspruchs 1.

Schraubdübel mit Setzwerkzeug sind bekannt durch die FR-A-2 653 503 und die DE-A-41 06 467. Ihr Setzwerkzeug hat einen langen Schaft mit einem Bohrende, das dem Vorbohren eines Dübelaufnahmelochs dient. Im hinteren Bereich dieses Schaftes ist an einer Schafterweiterung eine besondere Eingriffsprofilierung vorgesehen, die zur Herstellung einer Kopplung in eine dazu passend profilierte Ausnehmung des Schraubdübel formschlüssig eingreift. Auf diese Weise kann sich der Schraubdübel aufgrund der dem Bohren dienenden-Drehbewegung des Setzwerkzeuges mit seinen vorderen Schneidzähnen und seinem Gewinde in einen Leichtbaustoff, z.B. eine Gipsplatte, einschneiden.

Durch die DE-A-40 39 831 ist ausserdem ein Schraubdübel mit Setzwerkzeug bekannt, bei dem die Kopplung zwischen beiden durch einen flachen Werkzeugschaft und eine passend geformte, sich durch den gesamten Schraubdübel erstreckende Eingriffsnut erfolgt, so dass ein Kopplungseingriff über die gesamte Dübellänge gegeben ist.

Die Bohrspitze der Setzwerkzeuge entsprechend der FR-A-2 653 503 und der DE-A-40 39 831 ist ausserdem so geformt, dass das Setzwerkzeug nach dem Setzen des Schraubdübels auch zum Einschrauben einer Kreuzschlitzschraube verwendet werden kann.

Die bekannten Schraubdübel haben den Nachteil, dass sie nur zusammen mit dem für sie ausgebildeten Setzwerkzeug gesetzt werden können und dass ihr Setzwerkzeug zusätzlich nur zum Einschrauben von Kreuzschlitzschrauben einsetzbar ist. Die Schraubdübel der FR-A-2 653 503 und der DE-41 06 467 haben auch den Nachteil, dass sich das Gewinde eines Befestigungselementes bzw. einer Schraube in die zylindrische Innenwand des Schraubdübels einschneiden muss, so dass hierzu ein verhältnismässig hohes Drehmoment erforderlich ist, durch dass die Eingriffsverbindung zwischen dem Schraubdübel und dem Leichtbaustoff zerstört werden kann.

Der Erfindung liegt die Aufgabe zugrunde, die genannten Nachteile zu vermeiden und einen Schraubdübel zu finden, der zum Setzen nicht ein speziell für ihn geformtes Setzwerkzeug erfordert und somit mit verschiedenartigen Setzwerkzeugen setzbar. Die Lösung dieser Aufgabe erfolgt aufgrund der kennzeichnenden Merkmale des Patentanspruchs 1. Vorteilhafte Ausführungsbeispiele der Erfindung sind Gegenstand der abhängigen Patentansprüche und werden im Folgenden an Hand der Zeichnungen beschrieben. Es zeigen:
Fig.1 bis Fig.3 unter der Bezeichnung "Bit" marktbekannte Schraubwerkzeuge in perspektivischer Darstellung, mit einem erfindungsgemässen Schraubdübel,
Fig.4 ein für den erfindungsgemässen Schraubdübel ebenfalls geeignetes Setzwerkzeug,
Fig.5 einen Axialschnitt durch einen erfindungsgemässen Schraubdübel zusammen mit einem in ihn eingeführten Schraubwerkzeug nach Fig.1,
Fig.6 einen Axialschnitt durch einen erfindungsgemässen Schraubdübel zusammen mit einem in ihn eingeführten Schraubwerkzeug nach Fig.2,
Fig.7 eine Aufsicht auf den Flansch des Schraubdübels entsprechend den Fig. 1 bis 6,
Fig.8 einen Querschnitt durch einen Schraubdübel mit einem Schraubwerkzeug nach Fig.1, entlang der Linie VIII-VIII der Fig.5,
Fig.9 einen Querschnitt entlang der Linie IX-IX der Fig.6,
Fig.10 einen Axialschnitt durch einen Schraubdübel nach Fig. 1 bis 6 im Eingriff mit dem Setzwerkzeug nach Fig.10,
Fig.11 einen Axialschnitt einer weiteren Ausführungsform eines erfindungsgemässen Schraubdübels im Eingriff mit einem bohrenden Setzwerkzeug,
Fig.12 eine perspektivische Darstellung der weiteren Ausführungsform eines erfindungsgemässen Schraubdübels im Eingriff mit einer zweiten Ausführungsform eines bohrenden Setzwerkzeuges,
Fig.13 eine perspektivische Darstellung des Schraubdübels mit Setzwerkzeug nach Fig.12 bei entspannter Form der Schraubenfeder,
Fig.14 einen Axialschnitt durch die Anordnung entsprechend Fig.12,
Fig.15 eine stärker vergrösserte, perspektivische Darstellung des Schraubdübels nach Fig.11 bis Fig.14,
Fig.16 eine Seitenansicht des Schraubdübels nach Fig.15 in beispielhafter Originalgrösse,
Fig.17 eine weitere perspektivische Darstellung des Schraubdübels nach Fig.15,
Fig.18 einen Axialschnitt des Schraubdübels nach Fig.15,
Fig.19 eine perspektivische Darstellung des Schraubdübels nach Fig.15 mit einem eingesetzen Befestigungselement,
Fig.20 einen Axialschnitt durch eine Befestigungsanordnung an einer Wand, mit einem Schraubdübel nach Fig.15,
Fig.21 einen Axialschnitt durch eine Befestigungsanordnung an einer Wand, mit einer dritten Ausführungsform eines Schraubdübels,
Fig.22 eine perspektivische Darstellung des Schraubdübels nach Fig.22 mit einem eingesetzten Befestigungswerkzeug,
Fig.23 eine perspektivische Darstellung einer vierten Ausführungsform eines Schraubdübels in Anordnung auf einem Setzwerkzeug und
Fig.24 einen Axialschnitt durch die Anordnung nach Fig.23.

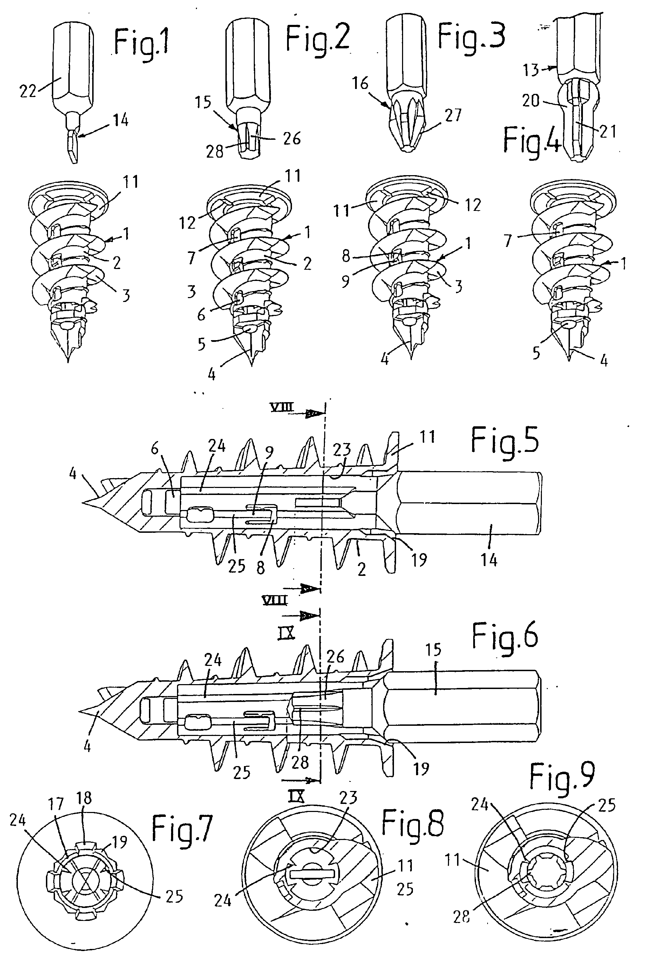

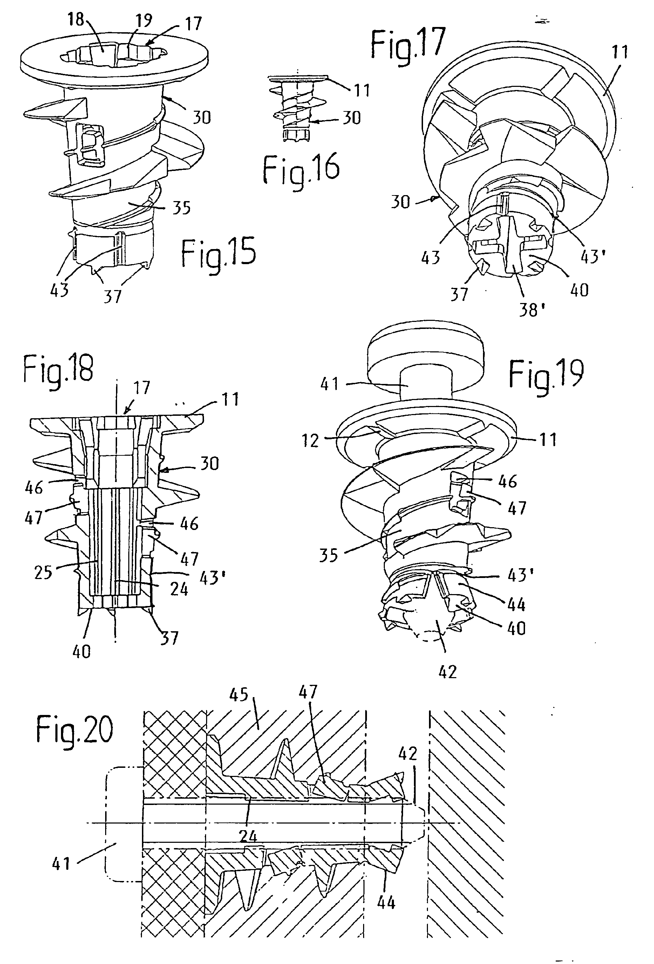

Die in den Fig.1 bis Fig.5 dargestellten Schraubdübel 1 haben einen hülsenförmigen Dübelkörper 2, der von einem zum Einschneiden in Leichtbaustoff geeigneten Gewindegang 3 umschlossen ist. Nach vorn endet der Schraubdübel 1 in einer Bohrspitze 4, so dass er selbstbohrend in Leichtbaustoff eingebohrt werden kann. Für die Aufnahme von Bohrmehl sind in dem hülsenförmigern Dübelkörper 2, angrenzend an die Bohrspitze, seitlich und nach vorn zur Bohrspitze 4 hin Öffnungen 5 bis 7 vorgesehen. In einer weiteren Öffnung 8 des Dübelkörpers 2 ist eine Ankerklinke 9 vorgesehen, die beim Einschrauben eines Befestigungselementes 10 in den Schraubdübel 1 nach aussen gedrückt wird und somit die Verankerung im umgebenden Leichtbaustoff verbessert. Eine nähere Beschreibung und deutlichere Darstellung der Ankerklinke 9 folgt an Hand einer weiteren Ausführungsform eines Schraubdübels entsprechend den Fig. 14 bis 18. Für die Abstützung an der Bauwerksoberfläche hat der Schraubdübel 1 an seinem hinteren Ende einen Flansch 11. Rippen 12 an seiner Unterseite unterstützen die torsionsfeste Verankerung des Schraubdübels 1 im Leichtbaustoff.

Das zum Einschrauben des Schraubdübels 1 erforderliche Drehmoment wird durch den Eingriff eines Setzwerkzeuges 13 in den Schraubdübel 1 übertragen. Aufgrund der Erfindung kann zusätzlich zu einem speziellen, für den Schraubdübel gestalteten Setzwerkzeuges mit Kreuzschlitzeingriff, auch ein unter der Bezeichnung "Bit" marktbekanntes Schraubwerkzeug 14 -16 verwendet werden, über das nahezu jeder Anwender zum Eindrehen von Schrauben bereits verfügt. Die Fig.1 bis Fig.3 zeigen Ausführungsbeispiele solcher Bitwerkzeuge, die alle einen identisch geformten und dimensionierten Sechskantschaft aufweisen.

Um diese zusätzliche Verwendung von Bitwerkzeugen verschiedener Art zu ermöglichen, hat ein erfindungsgemässer Schraubdübel 1 in seinem Flansch 11 eine profilierte Ausnehmung 17 mit mehreren Eingriffbereichen 18,19, die aufgrund ihrer Anzahl und Anordnung sowohl einen Vierkanteingriff z.B. des erweiterten Bereichs der Rippen 20,21 des Setzwerkzeuges 13 nach Fig.4 als auch den Sechskanteingriff des Sechskantschaftes 22 der Bitwerkzeuge 14 bis 16 ermöglichen. Wie die Aufsicht auf den Flansch 11 der Darstellung in Fig.7 zeigt, sind in der Ausnehmung 17 vier zueinander diametral bzw. kreuzschlitzartig angeordnete Eingriffsbereiche 18 und zwischen diesen jeweils zwei winkelförmige Eingriffsbereiche 19. Durch die somit gegebene Gesamtzahl von 12 Eingriffsbereichen 18,19 der Ausnehmung 17 kann der Sechskantschaft 22 der Bitwerkzeuge 14 bis 16 formschlüssig in die Ausnehmung 17 eingreifen, wie die in nahezu vollständigem Eingriff gezeigten Bitwerkzeuge 14,15 der Schnittdarstellungen der Fig.5 und Fig.6 veranschaulichen.

Um die Verwendung von Bitwerkzeugen als Setzwerkzeug, d.h. zum Halten, Führen und Drehen des Schraubdübels 1 beim selbstbohrenden Einbringen in einen Leichtbaustoff zu ermöglichen, hat ein erfindungsgemässer Schraubdübel ausserdem eine neuartige Anordnung der entlang seiner Innenwand 23 durch Längsrippen 24,25 gebildeten Innenprofilierung. Diese Anordnung verhindert, dass ein Eingriffskopf 26 oder 27 eines Bitwerkzeuges 15 bzw. 16 mit sechs Eingriffsrippen 28 bzw. 29 an den Längsrippen 24,25 anstösst und somit ein formschlüssiger Eingriff des Bitwerkzeuges 15 bzw. 16 im Schraubdübel 1 unmöglich wird. Die Darstellungen in Fig.8 und 9 zeigen diese neuartige Anordnung mit vier Längsrippen 24,25, mit einem grösseren und einem kleineren Abstand zwischen zwei Rippenpaaren in diametral paarweise gleicher Anordnung. Der kleinere Abstand zwischen einem Paar von Längsrippen entspricht einem Winkel von 60 Grad und muss im Bereich von 60 bis 80 Grad liegen. Die Fig.8 und 9 machen auch deutlich, dass die Anordnung der Längsrippen 24,25 den Eingriff von Bitwerkzeugen zulässt, die eine zwei-, vier- oder sechskantigen Eingriffskopf aufweisen.

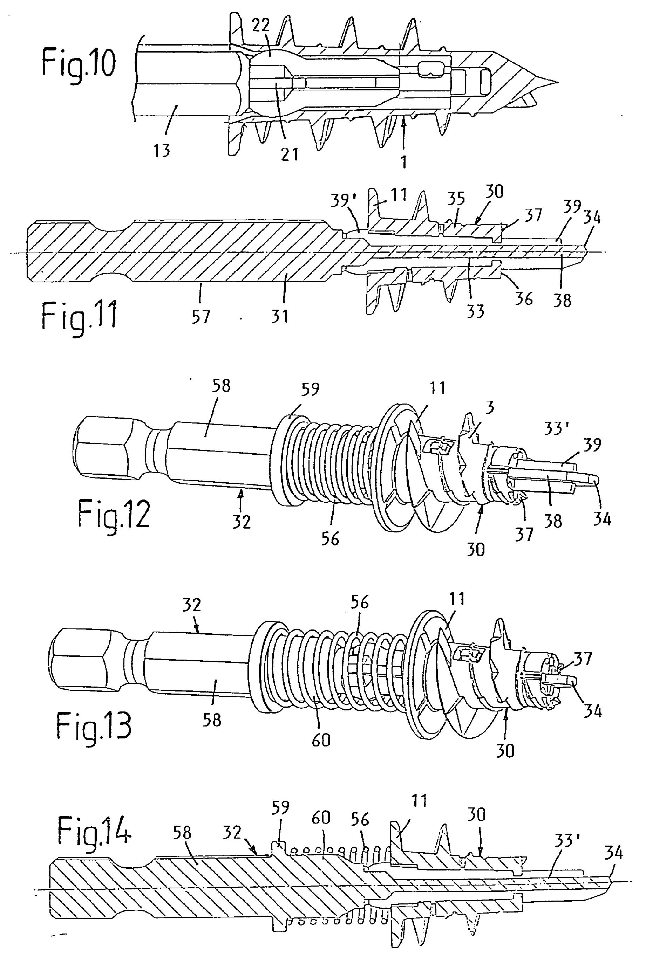

Die Darstellungen der Fig.11 bis 14 zeigen am Beispiel einer zweiten Ausführungsform eines Schraubdübels 30 zwei verschiedene Setzwerkzeuge 31,32, die ein über den Schraubdübel 30 hinaus nach vorn herausragenden Vierkantschaft 33 mit einem Bohrende 34 aufweisen. Durch dieses Bohrende 34 wird beim Setzen des Schraubdübels 30 ein Loch vorgebohrt, so dass der Schraubdübel 30 kein spitz auslaufendes Bohrende benötigt und entsprechend wesentlich kürzer ausgeführt sein kann. Das Bohrende 34 ist so geformt, dass das Setzwerkzeug 31 bzw. 32 auch zum Eindrehen von Kreuzschlitzschrauben geeignet ist.

Um das Bohren bis auf den Aussendurchmesser des hülsenförmigen Dübelkörpers 35 zu ermöglichen, sind an der Stirnfläche 36 des Dübelkörpers 35 in Umfangsrichtung verteilt fräserartig mehrere kleine Bohrzähne 37 vorgesehen. Für die Aufnahme der vier Schaftrippen 38,39 des Vierkantschaftes 33 hat die Stirnfläche 36 des Dübelkörpers 35 eine entsprechend geformte, kreuzförmige Öffnung 38', wie sie besonders gut in der Darstellung der Fig.17 zu sehen ist. Auf diese Weise wird die das erforderliche Drehmoment übertragende Kopplung und Führung zwischen Setzwerkzeug 31 bzw. 32 und Schraubdübel 30 zusätzlich zu dem Eingriff der bogenförmigen Erweiterungen 39' der Schaftrippen 38,39 in der flanschseitigen Ausnehmung 17 verbessert. Ausserdem verhindern die stirnseitigen Wandteile 40 ein Eindringen von Bohrmehl in den Schraubdübel 30.

Eine dritte Funktion der Wandteile 40 wird beim Eindringen eines Befestigungselementes 41 verwirklicht, wie es die Darstellungen der Fig.19 und 20 veranschaulichen. Beim Einschrauben eines Befestigungselementes in den Schraubdübel 30 drückt dessen spitz auslaufendes Ende 42 die Wandteile 40, zusammen mit einem nach hinten durch Kerblinien 43,43' begrenzten Wandteil 44 des Dübelkörpers 35, klappenartig nach aussen, so dass die entstehende Erweiterung zur Verankerung des Schraubdübels 30 im Leichtbaustoff oder hinter einer Baustoffplatte 45 entsprechend der Darstellung in Fig.20 beiträgt.

Ausserdem schwenken beim Einschrauben des Befestigungselementes 41 die in der Wand des Dübelkörpers 35 an verschiedenen Stellen in Öffnungen 46 angeordneten Ankerklinken 47 nach aussen in den Leichtbaustoff hinein und tragen so zur zusätzlichen Verankerung des Schraubdübels 35 bei. Zum Dübelinnenraum hin weisen die Ankerklinken 47 einen Teilder nach innen ragenden Längsrippen 24 bzw. 25 auf, so dass das Gewinde des Befestigungselementes 41 über diesen Rippenteil die Ankerklinke 47 nach aussen drückt.

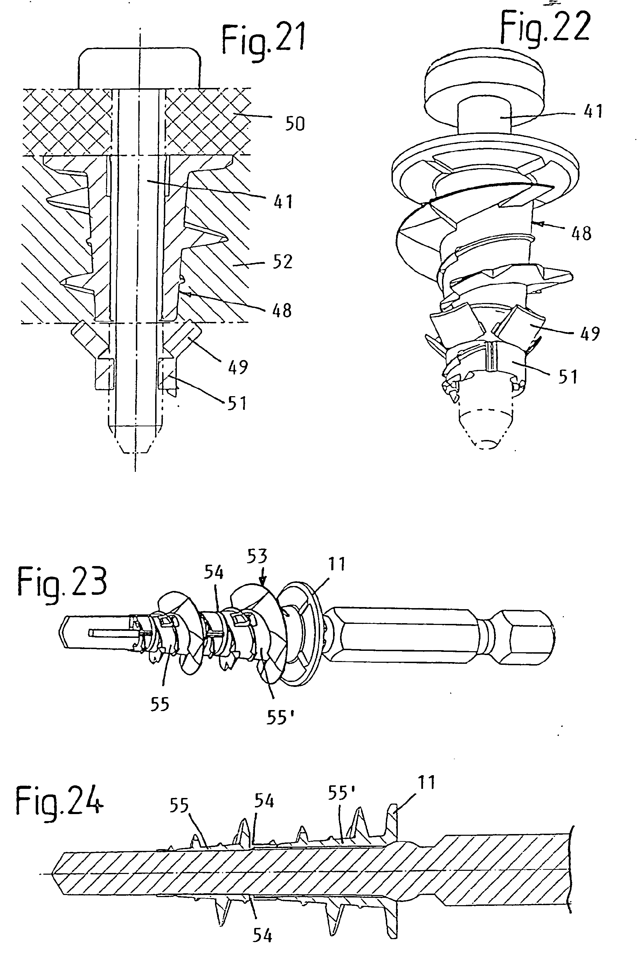

Die in den Fig. 21 und 22 gezeigte dritte Ausführungsform eines Schraubdübels unterscheidet sich gegenüber der zweiten Ausführungsform durch die Anordnung mehrerer Ankerklinken 49 in gleichem Abstand vom Dübelende. Beim Einschrauben eines Befestigungselementes 41 in den Schraubdübel 48 werden sie zuerst etwas nach aussen gedrückt. Durch eine weitere Drehbewegung des sich an einem Bauelement 50 abstützenden Befestigungselementes 41 im Gewindeeingriff mit dem äusseren Endbereich 51 des Schraubdübels 48 wird dieser an den übrigen Teil des Schraubdübels 48 herangezogen und die entsprechende Stauchbewegung bewirkt entsprechend der Darstellung in Fig.21 ein weiteres Ausklappen der Ankerklinken 49, so dass sie bei einer der Dicke des plattenförmigen Leichtbaustoffes 52 angepassten bzw. entsprechend ausgewählten Dübellänge hinter der Platte eingreifen.

Fig.23 und Fig.24 zeigen ein viertes Ausführungsbeispiel eines Schraubdübels 53. Dieser hat für den Eingriff in eine dickere Schicht von Leichtbaustoff eine grössere Länge und weist nach einem ersten, vom Flansch 11 ausgehenden Gewindegang bzw. in einem mittleren Bereich der Dübellängserstreckung einen umlaufenden Solltrennbereich 54 auf, so dass der vordere Teil 55 des Schraubdübels abbrechbar ist, falls ein kürzerer Schraubdübel 55' entsprechend dem hinteren Teil eines solchen Langdübels 53 benötigt wird. Vorzugsweise hat der Solltrennbereich durch Schlitze getrennte Sollbruchstellen, so dass nach dem Sollbruch an ihnen scharfkantige Bruchreste übrigbleiben, die beim späteren Setzen des Schraubdübels 55' die Aufgabe von Bohrzähnen (37) entsprechend dem zweiten Ausführungsbeispiel der Fig.15 bis 18 übernehmen.

Zum Setzen der Schraubdübel 30, 48 und 53 entsprechend dem zweiten, dritten und vierten Ausführungsbeispiel ist ebenfalls ein Bitwerkzeug z.B. entsprechend den Darstellungen der Fig. 1 bis 3 geeignet, jedoch setzt deren Verwendung ein Vorbohren in einem vorausgehenden Arbeitsgang voraus. Zum Setzen der Schraubdübel 30,48,53 in einem Arbeitsgang ist jedoch ein besonderes, ein Bohrende 34 aufweisendes Setzwerkzeug zu verwenden, wie es in den Fig.11 bis 14 im Eingriff mit einem Schraubdübel 30 und in Fig.23 und 24 im Eingriff mit einem Schraubdübel 53 gezeigt ist.

Das Ausführungsbeispiel eines Setzwerkzeuges entsprechend Fig.12 bis 14 unterscheidet sich gegenüber dem bereits an Hand der Fig.11 beschriebenen Setzwerkzeug 31 durch eine zusätzliche Schraubenfeder 56, durch die der Schraubdübel 30 bereits zu Beginn des Setzens auf dem Setzwerkzeug 32 eine vordere Position entsprechend der Darstellung in Fig.13 einnimmt und durch die er beim Einbohren in den Leichtbaustoff eine der Federkraft entsprechende Vorschubkraft erhält. Auf diese Weise kann auf den Schraubdübel 30 auch dann eine Vorschubkraft ausgeübt werden und das Setzen des Schraubdübels 30 fortgesetzt werden , wenn das Bohrende 34 des Setzwerkzeuges 32 sofort nach Durchdringen einer Platte aus Leichtbaustoff z.B. an einer Betonwand Widerstand findet. Das Einschrauben erfolgt so lange, bis der Flansch 11 sich an der Aussenfläche der aus Leichtbaustoff bestehenden Platte 52 eingräbt und dort abstützt. Zweckmässig wird hierbei eine Bohrmaschine mit einstellbarem Drehmoment verwendet, wie es z.B. an handelsüblichen Akkuschraubern möglich ist.

Für die Aufnahme im Bohrfutter einer nichtdargestellten Bohrmaschine haben die Setzwerkzeuge 13,31 und 32 einen Sechskant-Kupplungsschaft 57,58 mit genormten Abmessungen. Beim Setzwerkzeug nach Fig.11 schliesst sich an den Kupplungsschaft 57 der Vierkant-Führungschaft 33 an. Beim Setzwerkzeug 32 nach Fig.12 bis 14 endet der Sechskant-Kupplungsschaft 58 an einem ringförmig umlaufenden Bund 59 und setzt sich in einem zylindrischen Schaftteil 60 mit einer ausreichenden Länge fort, um der auf diesen aufgeschobenen Schraubenfeder 56 eine Führung zu geben.

## Patentansprüche

1. Schraubdübel zum Einschrauben in Leichtbaustoffe, der einen hülsenförmigen, von einem Gewinde (3) umschlossenen Dübelkörper (2,35), rückseitig einen Flansch (11), im Bereich seines vorderen Endes fräserartig mindestens einen Schneidzahn (4,37), entlang seiner Innenwand (23) eine durch mehrere Längsrippen (24,25) gebildete Innenprofilierung für das Einschneiden des Gewindes eines Befestigungselementes (41) und in seinem Flansch (11) eine profilierte Ausnehmung (17) für die Kopplung mit einer Eingriffsprofilierung (20,21; 28,29,39) eines Setzwerkzeuges (13-16,31,32) aufweist, **dadurch gekennzeichnet, dass** die profilierte Ausnehmung (17) im Bereich des Flansches (11) eine zum Eingriff mit der standardisierten Sechskantprofilierung (22) eines Bitwerkzeuges (14-16) geeignete Profilierung aufweist, wobei die Längsrippen (24,25) der Innenprofilierung in Umfangsrichtung mit mindestens zwei verschiedenen Abständen voneinander angeordnet sind, für die wahlweise Aufnahme eines zwei-, vier oder sechskantigen Eingriffskopf (26,27) des Bitwerkzeuges (14-16) zwischen ihnen.

2. Schraubdübel nach Anspruch 1, **dadurch gekennzeichnet, dass** die profilierte Ausnehmung (17) im Bereich des Flansches 8-eckig ist und zusätzlich Kreuzschlitzausnehmungen aufweist, so dass die Ausnehmung (17) insgesamt zwölf Eingriffsausschnitte (18,19) aufweist.

3. Schraubdübel nach Anspruch 1 oder 2, **dadurch gekennzeichnet, dass** die Innenprofilierung für das Einschneiden des Gewindes eines Befestigungselementes (51) in diametral paarweise gleicher Anordnung vier Längsrippen (24,25) aufweist, wobei der kleinere Abstand zwischen den Längsrippen einem Winkel im Bereich von 60 bis 80 Grad entspricht.

4. Schraubdübel nach Anspruch 2, **dadurch gekennzeichnet, dass** das Bohrende eine Bodenwand aufweist, die aus mehreren, durch Schlitze (38) voneinander getrennten Wandteilen (40) besteht und dass an der Bodenwand stirnseitig mehrere Bohrzähne (37) vorgesehen sind.

5. Schraubdübel nach Anspruch 4, **dadurch gekennzeichnet, dass** die Schlitze (38) radial bis zum Umfangsbereich des Dübelkörpers (2) verlaufen und dass angrenzend an die Schlitze (38) in der Wand des Dübelkörpers (35) jeweils eine Kerbe (43) achsparallel bis zu einer umlaufenden Kerblinie (43') verläuft, zur Begrenzung von ausschwenkbaren Wandteilen (44).

6. Schraubdübel nach einem der Ansprüche 1 bis 5, **gekennzeichnet durch** in Wandöffnungen (8,46) des Dübelkörpers (2,35) schwenkbar gehaltene Ankerklinken (9,47), die einen in den Innenraum des Schraubdübels (1,30,48,53) hineinragenden Bereich aufweisen, so dass sie **durch** ein Befestigungselement (41) nach aussen in Ankerposition drückbar sind.

7. Schraubdübel nach einem der Ansprüche 1 bis 6, **gekennzeichnet durch** in Umfangsrichtung nebeneinander angeordnete, **durch** Kerblinien begrenzte, ausklappbare Ankerklinken (49), wobei eine dem Dübelende nächste, in Umfangsrichtung verlaufende Kerblinie eine scharnierartige Verbindung für die Klappbewegung der Ankerklinken (49) bildet.

8. Schraubdübel nach einem der Ansprüche 1 bis 8, **dadurch gekennzeichnet, dass** in einem mittleren Bereich der Dübellängserstreckung ein umlaufender Solltrennbereich (54) vorgesehen ist, so dass der vordere Teil 55 des Schraubdübels abbrechbar ist.

9. Setzwerkzeug für einen Schraubdübel nach einem der Ansprüche 4 bis 8, **gekennzeichnet durch** einen zusätzlich zu einem Sechskant-Kupplungsschaft (57) mit genormten Abmessungen vorgesehenen Vierkantschaft (33,33') für die axialverschiebbare Führung eines Schraubdübels (30,48,53), wobei den Vierkant bildende Führungsrippen (38,39) rückseitig eine Erweiterung (39') aufweisen, für den Eingriff in Eingriffsbereiche (18) einer profilierten Ausnehmung (17) im Flansch (11) des Schraubdübels (30,48,53).

10. Setzwerkzeug nach Anspruch 9, **dadurch gekennzeichnet, dass** zwischen dem Kupplungsschaft (58) und dem Vierkantschaft (33') ein ringförmig umlaufender Bund (59) und ein an diesen angrenzender Schaftteil 60 angeordnet ist, auf den eine Schraubenfeder (56) aufgeschoben ist, die zur Anlage am Flansch (11) eines Schraubdübels (30,48,53) bestimmt ist.

## Claims

1. Screwed insert for screwing in lightweight material, which has a sleeve-shaped dowel body (2, 35), surrounded by a thread (3), and shows on the rear side a flange (11), in the area of its front end cutter-shaped at least one cutting tooth (4, 37), along its inner wall (23) an inner profiling formed by multiple longitudinal ribs (24, 25) for cutting in the thread of a fastener (41) and in its flange (11) a profiled clearance (17) for the coupling with an engagement profiling (20, 21; 28, 29, 39) of a setting tool (13-16, 31, 32), **characterized in that** the profiled clearance (17) in the region of the flange (11) shows a suitable profiling for engaging with a standardized hexagonal profiling (22) of a bit tool (14 -16), whereby the longitudinal ribs (24, 25) of the inner profiling are arranged in the peripheral direction with at least two different distances from one another, for the selective acceptance of a two-, four or six-edged engagement head (26,27) of the bit tool (14-16) between them.

2. Screwed insert as per claim 1, **characterized in that** the profiled clearance (17) is 8-edged in the region of the flange and additionally shows cross-recess clearances, so that the clearance (17) shows a total of twelve engagement notches (18, 19).

3. Screwed insert as per claim 1 or 2, **characterized in that** the inner profiling shows for cutting in the thread of a fastener (51) in diametrical pair-wise arranged four longitudinal ribs (24, 25), whereby the smaller distance between the longitudinal ribs corresponds to an angle of 60 to 80 degrees.

4. Screwed insert as per claim 2, **characterized in that** the boring shows a floor wall, which comprises of multiple wall parts (40) separated by slits (38) and that at the floor wall multiple boring teeth (37) are provided at the front side.

5. Screwed insert as per claim 4, **characterized in that** the slits (38) run radial up to the peripheral area of the dowel body (2) and that adjacent to the slits (38) in the wall of the dowel body (35) a notch (43) runs parallel to the axis of a surrounding notch line (43'), for demarcating the swiveling wall parts (44).

6. Screwed insert as per the claims 1 to 5, **characterized by** the anchor handles (9, 47) held in swiveling position in the wall openings (8, 46) of the dowel body (2,35), which show a region protruding in the inner space of the screwed insert (1, 30, 48, 53), so that they can be pressed outside in anchoring position by a fastener (41).

7. Screwed insert as per one of the claims 1 to 6, **characterized by** open anchor handles (49) arranged in peripheral direction, demarcated by notch lines, whereby a notch line nearest to the dowel end, running in peripheral direction forms a hinge-shaped connection for the opening movement of the anchor handles (49).

8. Screwed insert as per one of the claims 1 to 8, **characterized in that** in a middle region of the longitudinal stretch of the screwed insert (53) a surrounding reference separator area (54) is provided, so that the front part 55 of the screwed insert can be broken away.

9. Setting tools for a screwed insert as per one of the claims 4 to 8, **characterized by** a square shaft (33,33') provided in addition to a hexagonal coupling shaft (57) with standardized dimensions for the axial displacement guiding of a screwed insert (30, 48, 53), whereby the square forming guiding ribs (38, 39) show on the rear side an extension (39'), for engagement in the engagement region (18) of a profiled clearance (17) in the flange (11) of the screwed insert (30, 48, 53).

10. Setting tool as per claim 9, **characterized in that** between the coupling shaft (58) and the square shaft (33') a ring-shaped surrounding collar (59) and a shaft part (60) adjacent to this is arranged, on which a helical spring (56) is pushed, which is meant to be installed at the flange (11) of a screwed insert (30, 48, 53).

## Revendications

1. Cheville vissable destinée à être vissée dans des matériaux de construction tendres, laquelle présente un corps de cheville (2,35) en forme de douille cylindrique, entouré par un filetage (3), une bride (11) à son extrémité arrière, au moins une dent de découpage (4,37) comme par fraisage au niveau de son extrémité avant, un profilage interne formé par plusieurs nervures longitudinales (24,25) le long de sa paroi interne (23) afin de cisailler le filetage d'un élément de fixation (41) et, dans sa bride (11), un évidement profilé (17) pour le couplage avec un profilage de mise en prise (20,21; 28,29,39) d'un outil de pose (13-16,31,32), **caractérisée en ce que** l'évidement profilé (17) au niveau de la bride (11) présente un profilage approprié pour la mise en prise avec le profilage hexagonal (22) standardisé d'un porte-embouts (14-16), moyennant quoi les nervures longitudinales (24,25) du profilage interne sont disposées dans la direction périphérique à au moins deux distances différentes les unes des autres, afin de recevoir entre elles en alternance une tête de mise en prise (26,27) à deux faces, carrée ou hexagonale du porte-embouts (14-16).

2. Cheville vissable selon la revendication 1, **caractérisée en ce que** l'évidement profilé (17) est octogonal au niveau de la bride et présente en outre des évidements en forme de fente cruciforme, de telle sorte que l'évidement (17) présente au total douze découpes de mise en prise (18,19).

3. Cheville vissable selon la revendication 1 ou 2, **caractérisée en ce que** le profilage interne pour cisailler le filetage d'un élément de fixation (51) présente quatre nervures longitudinales (24,25) disposées diamétralement par paires, moyennant quoi la distance la plus courte entre les nervures longitudinales correspond à un angle compris entre 60 et 80 degrés.

4. Cheville vissable selon la revendication 2, **caractérisée en ce que** l'extrémité de forage présente une paroi de fond, qui est constituée de plusieurs parties de paroi (40) séparées les unes des autres par des fentes (38) et **en ce que** plusieurs dents de forage (37) sont prévues à l'avant de la paroi de fond.

5. Cheville vissable selon la revendication 4, **caractérisé en ce que** les fentes (38) s'étendent radialement jusqu'à la zone périphérique du corps de cheville (2) et **en ce que**, à proximité des fentes (38), dans la paroi du corps de cheville (35), une encoche (43) respective s'étend sur un axe parallèle jusqu'à une ligne d'encoche (43') circulaire , afin de délimiter des parties de paroi (44) qui peuvent basculer vers l'extérieur.

6. Cheville vissable selon une des revendications 1 à 5, **caractérisée par** des cliquets d'ancrage (9,47) maintenus de manière basculable dans des ouvertures de paroi (8,46) du corps de cheville (2,35), lesquels présentent une portion qui saille dans l'espace interne de la cheville vissable (1,30,48,53), de telle sorte qu'ils puissent être pressés vers l'extérieur en position d'ancrage par un élément de fixation (41).

7. Cheville vissable selon une des revendications 1 à 6, **caractérisée par** des cliaquets d'ancrage (49) rabattables vers l'extérieur, disposés côté à côté dans la direction périphérique, délimités par des lignes d'encoches, moyennant quoi une ligne d'encoche postérieure à l'extrémité de cheville, s'étendant dans la direction périphérique forme une liaison de type charnière pour le mouvement de rabat des cliquets d'ancrage (49).

8. Cheville vissable selon une des revendications 1 à 8, **caractérisée en ce que**, dans une zone centrale de l'extension longitudinale de la cheville vissable (53), une zone de séparation de consigne circulaire (54) est prévue, de telle sorte que la partie avant (55) de la cheville vissable puisse être détachée.

9. Outil de pose d'une cheville vissable selon une des revendications 4 à 8, **caractérisé par** un arbre carré (33,33') aux dimensions standardisées prévu en plus d'un arbre de couplage hexagonal (57), en vue du guidage par coulissement axial d'une cheville vissable (30,48,53), moyennant quoi les nervures de guidage (38,39) formant le carré présentent à l'arrière un évasement (39') pour la mise en prise dans des zones de mises en prise (18) d'un évidement profilé (17) dans la bride (11) de la cheville vissable (30,48,53).

10. Outil de pose selon la revendication 9, **caractérisé en ce que** , entre l'arbre de couplage (58) et l'arbre carré (33'), une colerette (59) annulaire en faisant le tour et une partie d'arbre (60) adjacente à celle-ci sont disposées, sur laquelle un ressort à boudin (56) est coulissé, lequel est prévu afin de venir en appui sur la bride (11) d'une cheville vissable (30,48,53).
